# EUROPEAN PATENT APPLICATION

(11) **EP 4 187 202 A1**
(43) Date of publication of application: **31.05.2023**
(21) Application number: 22186073.7
(22) Date of filing: 20.07.2022
(51) Int. Cl.: G01C 19/5726, G01C 19/574, G01C 19/5755

(54) **SENSOR AND ELECTRONIC DEVICE**

(30) Priority: 17.11.2021 JP 2021187034
(71) Applicant: Kabushiki Kaisha Toshiba, Minato-ku Tokyo (JP)
(72) Inventor: GANDO, Ryunosuke, Tokyo (JP); ONO, Daiki, Tokyo (JP); TOMIZAWA, Yasushi, Tokyo (JP); MIYAZAKI, Fumito, Tokyo (JP); KAJI, Shiori, Tokyo (JP)
(74) Representative: Marks & Clerk LLP

(57) **Abstract**

According to one embodiment, a sensor includes a sensor element, and a controller. The sensor element includes a first sensor part. The first sensor part includes a first movable part which can vibrate. Vibration of the first movable part includes a first component and a second component. The controller is configured to perform to third mode operations. In the first mode operation, the controller is configured to derive a first rotation angle of the first movable part based on a first amplitude of the first component and a second amplitude of the second component. In the second mode operation, the controller is configured to derive a first angular velocity of the first movable part based on a change of a control signal. In the third mode operation, the controller is configured to supply a third mode signal to the first sensor part.

## Description

### FIELD

Embodiments described herein relate generally to a sensor and an electronic device.

### BACKGROUND

There is a sensor such as a gyro sensor or the like. It is desirable to improve the detection accuracy of a sensor and an electronic device.

### BRIEF DESCRIPTION OF THE DRAWINGS

FIG. 1 is a schematic diagram illustrating a sensor according to a first embodiment;
FIG. 2 is a schematic diagram illustrating operations of the sensor according to the first embodiment;
FIGS. 3A to 3C are schematic diagram illustrating operations of the sensor according to the first embodiment;
FIGS. 4A and 4B are schematic views illustrating the sensor according to the first embodiment;
FIG. 5 is a schematic plan view illustrating a part of the sensor according to the first embodiment;
FIGS. 6A and 6B are schematic views illustrating a sensor according to a second embodiment;
FIG. 7 is a schematic diagram illustrating operations of the sensor according to the second embodiment;
FIG. 8 is a schematic plan view illustrating a part of the sensor according to the second embodiment;
FIG. 9 is a schematic view illustrating an electronic device according to a third embodiment; and
FIGS. 10A to 10H are schematic views illustrating applications of the electronic device.

### DETAILED DESCRIPTION

According to one embodiment, a sensor includes a sensor element, and a controller. The sensor element includes a first sensor part. The first sensor part includes a first movable part which can vibrate. Vibration of the first movable part includes a first component in a first direction and a second component in a second direction. The second direction crosses the first direction. The controller is configured to perform a first mode operation, a second mode operation, and a third mode operation. In the first mode operation, the controller is configured to derive a first rotation angle of the first movable part based on a first amplitude of the first component and a second amplitude of the second component. In the second mode operation, the controller is configured to derive a first angular velocity of the first movable part based on a change of a control signal. The control signal causes a rotation angle of the first movable part to be constant. In the third mode operation, the controller is configured to supply a third mode signal to the first sensor part. The third mode signal causes the rotation angle of the first movable part to change.

According to one embodiment, a sensor includes a sensor element, and a controller. The sensor element includes a first sensor part and a second sensor part. The first sensor part includes a first movable part which can vibrate. Vibration of the first movable part includes a first component in a first direction and a second component in a second direction. The second direction crosses the first direction. The second sensor part includes a second movable part which can vibrate. Vibration of the second movable part includes a third component in a third direction and a fourth component in a fourth direction. The fourth direction crosses the third direction. The controller is configured to perform a first mode operation, a second mode operation, a third mode operation, and a fourth mode operation. In the first mode operation, the controller is configured to derive a first rotation angle of the first movable part based on a first amplitude of the first component and a second amplitude of the second component. In the second mode operation, the controller is configured to derive a second angular velocity of the second movable part based on a change of a control signal. The control signal causes a rotation angle of the second movable part to be constant. In the third mode operation, the controller is configured to supply a third mode signal to the first sensor part. The third mode signal causes a rotation angle of the first movable part to change. In the fourth mode operation, the controller is configured to supply a fourth mode signal to the second sensor part. The fourth mode signal causes the rotation angle of the second movable part to change.

According to one embodiment, an electronic device includes the sensor described above, and a circuit controller. The circuit controller is configured to control a circuit based on a signal obtained from the sensor.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### First embodiment

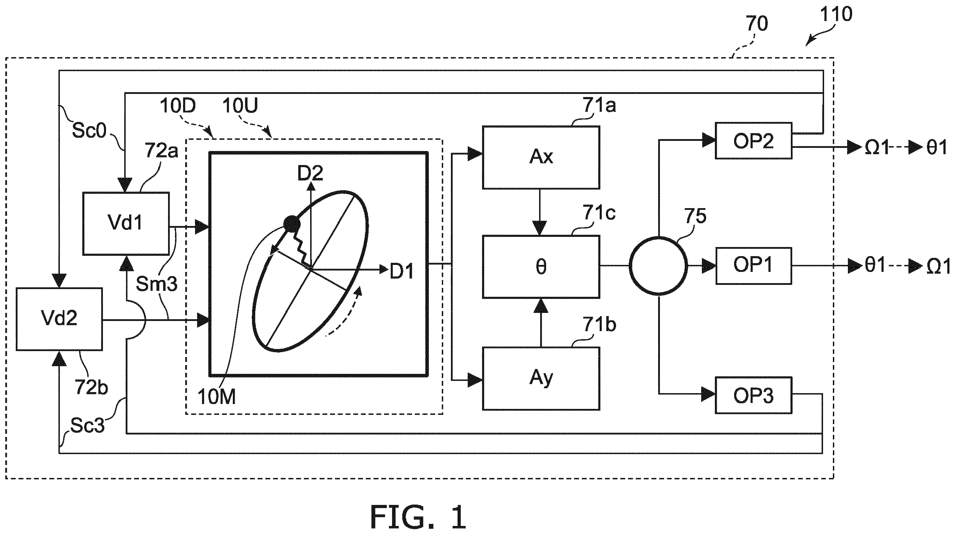

FIG. 1 is a schematic diagram illustrating a sensor according to a first embodiment.

As shown in FIG. 1, a sensor 110 according to the first embodiment includes a sensor element 10D and a controller 70. The sensor element 10D includes a first sensor part 10U. The first sensor part 10U includes a first movable part 10M that can vibrate. The vibration of the first movable part 10M includes a first component in a first direction D1 and a second component in a second direction D2. The second direction D2 crosses the first direction D1. The first movable part 10M vibrates, for example, along an elliptical orbit having these components.

For example, the controller 70 includes a first detector 71a, a second detector 71b, and a third detector 71c. The first detector 71a is configured to detect the amplitude (first amplitude Ax) of the first component in the first direction D1 based on the signal obtained from the first sensor part 10U. The second detector 71b is configured to detect the amplitude (second amplitude Ay) of the second component in the second direction D2 based on the signal obtained from the first sensor part 10U.

The third detector 71c is configured to derive a rotation angle *θ* based on a ratio of the first amplitude Ax and the second amplitude Ay, for example. For example, the rotation angle *θ* corresponds to, for example, tan-1 (-Ay / Ax).

The controller 70 is configured to perform a first mode operation OP1, a second mode operation OP2, and a third mode operation OP3. These operations are switched and performed.

For example, the controller 70 includes, for example, a mode controller 75. The first to third mode operations OP1 to OP3 are switched by the operation of the mode controller 75.

In the first mode operation OP1, the controller 70 is configured to derive the first rotation angle *θ*1 of the first movable part 10M based on the first amplitude Ax of the first component and the second amplitude Ay of the second component. In the first mode operation OP1, the rotation angle *θ* based on the above ratio is output as the first rotation angle *θ*1. The first mode operation OP1 corresponds to, for example, a WA (Whole Angle) mode.

For example, the controller 70 includes a first drive circuit 72a and a second drive circuit 72b. A first drive signal Vd1 is supplied from the first drive circuit 72a to the first sensor part 10U. A second drive signal Vd2 is supplied from the second drive circuit 72b to the first sensor part 10U. These drive signals cause the first movable part 10M to vibrate.

For example, an external force (acceleration) accompanied by rotation is applied to the first sensor part 10U. The vibration state (rotation angle) of the first movable part 10M changes according to the external force. For example, the vibration state changes due to the action of Coriolis force. Due to the change in the vibration state, the first amplitude Ax of the first component and the second amplitude Ay of the second component change. By detecting the ratio of these amplitudes, the rotation angle generated by the external force can be detected.

In the second mode operation OP2, the controller 70 is configured to derive a first angular velocity Ω1 of the first movable part based on a change of a control signal Sc0 so that the rotation angle of the first movable part 10M becomes constant. As described above, for example, the rotation angle of the first movable part 10M changes according to the external force. In the second mode operation OP2, when the external force is applied, the control signal Sc0 in which the rotation angle does not change and becomes constant is detected. For example, in the second mode operation OP2, the first drive signal Vd1 and the second drive signal Vd2 change based on the control signal Sc0. By controlling the control signal Sc0, the rotation angle of the first movable part 10M can be made constant regardless of the rotation due to the external force. By detecting such a control signal Sc0 (or the first drive signal Vd1 and the second drive signal Vd2), the angular velocity due to the external force (first angular velocity Ω1) can be known. The second mode operation OP2 corresponds to, for example, the FR (Force Rebalance) mode.

In the third mode operation OP3, the controller 70 is configured to supply a third mode signal Sm3 (for example, a voltage signal) to the first sensor part 10U. The third mode signal Sm3 arbitrarily changes the rotation angle of the first movable part 10M. For example, the controller 70 supplies a third mode control signal Sc3, which is the basis of the third mode signal Sm3, to the first drive circuit 72a and the second drive circuit 72b. The third mode signal Sm3 based on the third mode control signal Sc3 is supplied to the first sensor part 10U from the first drive circuit 72a and the second drive circuit 72b. The third mode signal Sm3 can vibrate the first movable part 10M at an arbitrary (desired) angle of rotation. The third mode operation OP3 is, for example, a VR (Virtual Rotation) mode. The third mode operation OP3 is performed, for example, at the time of calibrating the sensor.

As will be described later, in the first mode operation OP1, when the angular velocity of the vibration of the first movable part 10M is high, the first rotation angle *θ*1 can be detected with high accuracy. In the second mode operation OP2, when the angular velocity of the vibration of the first movable part 10M is low, the first angular velocity Ω1 can be detected with high accuracy. By switching and performing these operation modes, it is possible to detect with high accuracy over a wide dynamic range. On the other hand, the third mode operation OP3 is configured to be performed in which the first movable part 10M is vibrated at an arbitrary rotation angle. This facilitates calibration. According to the embodiment, it is possible to provide a sensor capable of improving accuracy.

As shown in FIG. 1, the first angular velocity Ω1 may be derived from the first rotation angle *θ*1 obtained in the first mode operation OP1. For example, the first angular velocity Ω1 is configured to be derived by performing a differential operation on the first rotation angle *θ*1.

As shown in FIG. 1, the first rotation angle *θ*1 may be derived from the first angular velocity Ω1 obtained in the second mode operation OP2. For example, the first rotation angle *θ*1 is configured to be derived by integrating the first angular velocity Ω1.

Hereinafter, an example of the operation of the controller 70 will be described.

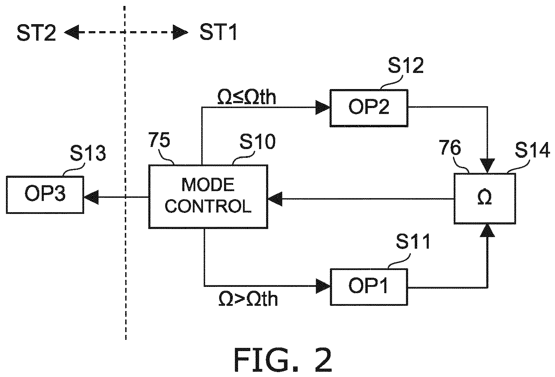

FIG. 2 is a schematic diagram illustrating the operation of the sensor according to the first embodiment.

As shown in FIG. 2, the mode controller 75 performs a mode control process (step S10). For example, the first sensor part 10U has a first state ST1 and a second state ST2. The first state ST1 is a detection state. The second state ST2 is a calibration state. In the second state ST2, for example, no external force is substantially applied to the first sensor part 10U. The second state ST2 is, for example, a stationary state.

The first state ST1 and the second state ST2 may be switched, for example, by setting of the user. Alternatively, the mode controller 75 may detect a vibration state (for example, angular velocity) of the first movable part 10M, and distinguish the detection state or the calibration state based on the detection result.

In the second state ST2, the third mode operation OP3 is performed (step S13).

For example, in the first state ST1, the angular velocity Ω is detected (estimated) (step S14). The detection of the angular velocity Ω is performed by, for example, the angular velocity detector 76. The angular velocity detector 76 is included in the controller 70. The detection of the angular velocity Ω may be performed by, for example, the first detector 71a and the second detector 71b.

The mode controller 75 selects the first mode operation OP1 and the second mode operation OP2 based on the detected angular velocity Ω (mode control process: step S10). For example, the controller 70 performs the second mode operation OP2 when the detected angular velocity Ω of the first movable part 10M is not more than a first threshold value Qth (step S12). The controller 70 performs the first mode operation OP1 when the detected angular velocity Ω exceeds the first threshold value Qth (step S11).

In the first state ST1, the selection of the first mode operation OP1 and the second mode operation OP2 may be repeatedly performed according to the detected angular velocity Ω.

As described above, in the first mode operation OP1, the controller 70 derives the first rotation angle θ1 based on a ratio of the first amplitude Ax of the first component and the second amplitude Ay of the second component. In the second mode operation OP2, the controller 70 derives the first angular velocity Ω1 based on a change of the control signal Sc0 so that the vibration state of the first movable part 10M becomes constant.

Hereinafter, an example of the characteristics of the sensor in the first to third mode operations OP1 to OP3 will be described.

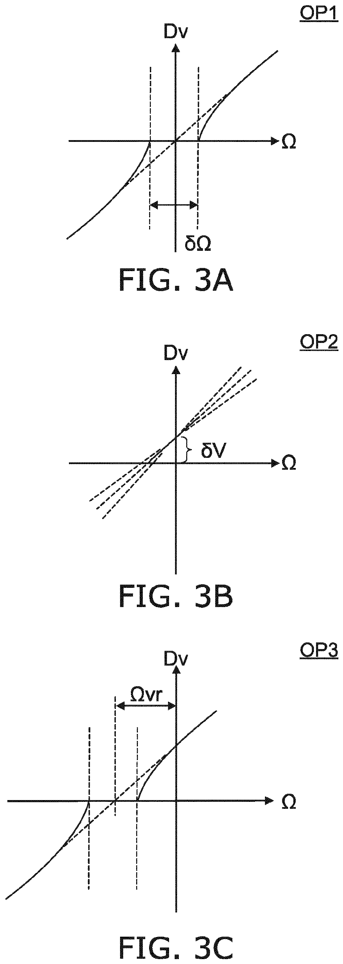

FIGS. 3A to 3C are schematic diagrams illustrating operations of the sensor according to the first embodiment.

FIGS. 3A to 3C correspond to the first to third mode operations OP1 to OP3, respectively. The horizontal axis of these figures is the angular velocity Ω. The vertical axis of these figures is the detected value Dv. These figures correspond to the sensitivity characteristic diagrams.

In the first mode operation OP1 of FIG. 3A, the obtained detected value Dv is the rotation angle. The rotation angle corresponds to the time integration of the angular velocity Ω. As shown in FIG. 3A, in the first mode operation OP1, when the absolute value of the angular velocity Ω is large, the detected value Dv changes with high sensitivity according to the angular velocity Ω. However, when the absolute value of the angular velocity Ω is small (region δΩ), it is difficult to obtain an accurate detected value Dv. In the first mode operation OP1, there is a dead region (region δΩ). Except for the dead region, the detected value Dv changes with a stable high sensitivity with respect to the angular velocity Ω.

In the second mode operation OP2 of FIG. 3B, the detected value Dv obtained is a voltage. The voltage is substantially proportional to the angular velocity Ω. However, as shown in FIG. 3B, there is a bias δV in the detected value Dv. The bias δV depends on, for example, the temperature characteristics of the sensor. As shown in FIG. 3B, in the second mode operation OP2, the detected value Dv changes depending on the variation of the proportionality coefficient and the like. In the second mode operation OP2, when the absolute value of the angular velocity Ω is large, the accuracy of the detected value Dv is low. However, when the absolute value of the angular velocity Ω is small, a relatively accurate detected value Dv can be obtained except for the effect of the bias δV. The first angular velocity Ω1 can be derived from the detected value Dv (voltage) obtained in the second mode operation OP2.

The characteristics in the first mode operation OP1 and the characteristics in the second mode operation OP2 are complementary. By switching and performing these operations, highly accurate detection becomes possible over a wide range of angular velocities.

As shown in FIG. 3C, in the third mode operation OP3, an angular velocity Ω including an arbitrary bias Qvr can be applied. Calibration of any state can be performed.

Hereinafter, an example of the structure of the sensor 110 will be described.

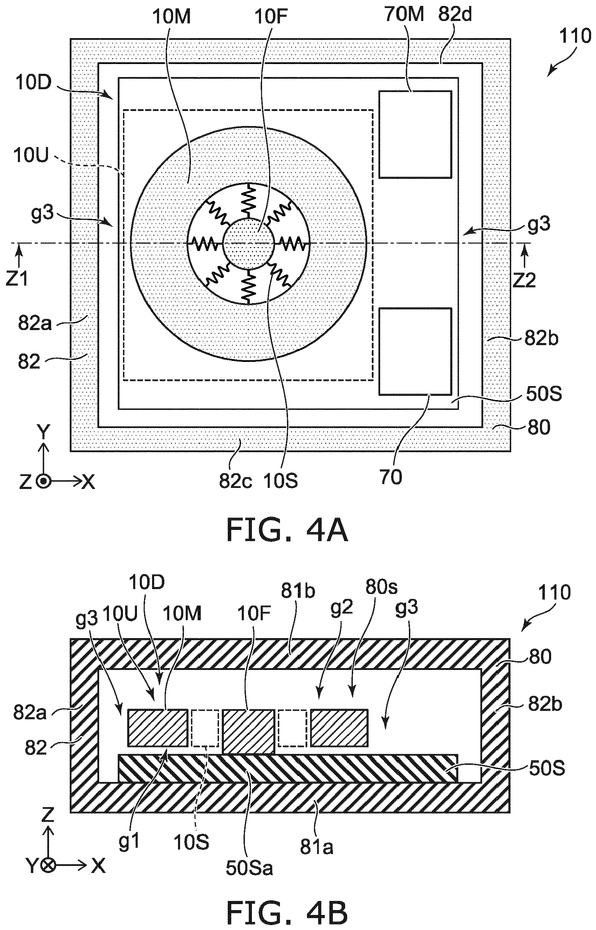

FIGS. 4A and 4B are schematic views illustrating the sensor according to the first embodiment.

FIG. 4A is a plan view. FIG. 4B is a cross-sectional view taken along the line Z1-Z2 of FIG. 4A.

As shown in FIGS. 4A and 4B, the first sensor part 10U includes a base body 50S, a first fixed part 10F, and a first supporter 10S. The base body 50S includes a first base body region 50Sa. The first fixed part 10F is fixed to the first base body region 50Sa. The first supporter 10S is supported by the first fixed part 10F. The first supporter 10S supports the first movable part 10M. As shown in FIG. 4B, a first gap g1 is provided between the base body 50S and the first supporter 10S, and between the base body 50S and the first movable part 10M. The first sensor part 10U is, for example, a MEMS (Micro Electro Mechanical Systems) element.

As shown in FIG. 4B, a direction from the first base body region 50Sa to the first fixed part 10F (for example, the stacking direction) is defined as a Z-axis direction. One direction perpendicular to the Z-axis direction is defined as an X-axis direction. A direction perpendicular to the Z-axis direction and the X-axis direction is defined as a Y-axis direction.

As shown in FIG. 4A, in a plane crossing the Z-axis direction (stacking direction from the first base body region 50Sa to the first fixed part 10F) (for example, the X-Y plane), the first movable part 10M is provided around at least a part of the first fixed part 10F. The first movable part 10M has, for example, an annular shape.

As shown in FIG. 4A, the controller 70 may be provided on the base body 50S. The memory part 70M may be provided on the base body 50S. The memory part 70M is configured to store, for example, information (for example, information) necessary for control and processing in the controller 70.

As shown in FIGS. 4A and 4B, in this example, the sensor 110 may include a housing 80. The housing 80 surrounds the sensor element 10D. The atmospheric pressure in a space 80s inside the housing 80 (see FIG. 4B) is less than 1 atm.

As shown in FIG. 4B, for example, the housing 80 includes a first member 81a and a second member 81b. The second member 81b is connected with the first member 81a. The first member 81a is, for example, a bottom portion. The second member 81b is, for example, a lid portion. FIG. 4A illustrates a state in which the second member 81b is removed.

The sensor element 10D is between the first member 81a and the second member 81b. A direction from the first member 81a to the second member 81b corresponds to the Z-axis direction.

As shown in FIGS. 4A and 4B, the housing 80 further includes a side member 82. The side member 82 is connected with the first member 81a and the second member 81b. There is the sensor element 10D between multiple regions of the side member 82 in a direction crossing the direction from the first member 81a to the second member 81b (Z-axis direction).

As shown in FIG. 4A, the side member 82 includes first to fourth side member regions 82a to 82d. For example, in the X-axis direction, the sensor element 10D is between the first side member region 82a and the second side member region 82b. For example, in the Y-axis direction, the sensor element 10D is between the third side member region 82c and the fourth side member region 82d. The sensor element 10D is airtightly sealed in the space 80s inside the housing 80.

As shown in FIG. 4B, the base body 50S is fixed to the first member 81a. A second gap g2 is provided between the first movable part 10M (first sensor part 10U) and the second member 81b. A third gap g3 is provided between the first movable part 10M (first sensor part 10U) and the side member 82. These gaps allow the first movable part 10M to move.

The first sensor part 10U is, for example, an angle gyro sensor. The first sensor part 10U is, for example, a RIG (Rate Integrating Gyroscope). The first sensor part 10U can directly measure the rotation angle of the detection target.

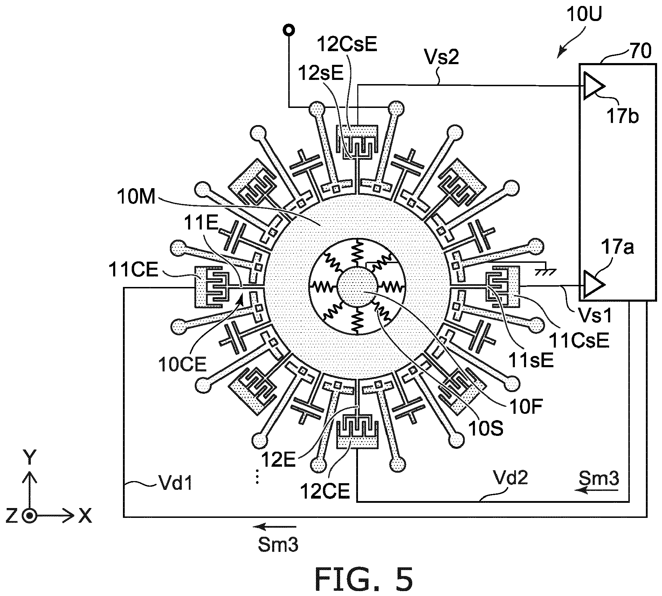

FIG. 5 is a schematic plan view illustrating a part of the sensor according to the first embodiment.

As shown in FIG. 5, the first sensor part 10U includes the first fixed part 10F, the first supporter 10S, and a first sensor counter electrode 10CE. As described above, the first fixed part 10F is fixed to the first base body region 50Sa (see FIG. 4B). The first supporter 10S is supported by the first fixed part 10F. The first supporter 10S supports the first movable part 10M. The first sensor counter electrode 10CE faces the first movable part 10M.

As shown in FIG. 5, the first movable part 10M includes a first vibration electrode 11E and a second vibration electrode 12E. The first sensor counter electrode 10CE includes a first counter vibration electrode 11CE and a second counter vibration electrode 12CE. The first counter vibration electrode 11CE faces the first vibration electrode 11E. The second counter vibration electrode 12CE faces the second vibration electrode 12E.

A direction from the first fixed part 10F to the first counter vibration electrode 11CE and a direction from the first fixed part 10F to the second counter vibration electrode 12CE cross the Z-axis direction (the direction from the first base body region 50Sa to the first fixed part 10F). In this example, a direction from the first fixed part 10F to the first counter vibration electrode 11CE is along the Z-axis direction. A direction from the first fixed part 10F to the second counter vibration electrode 12CE is along the Y-axis direction.

The direction from the first fixed part 10F to the first counter vibration electrode 11CE (for example, the X-axis direction) crosses the direction from the first fixed part 10F to the second counter vibration electrode 12CE (for example, the Y-axis direction).

For example, the controller 70 is configured to supply the first drive signal Vd1 (for example, the first drive voltage) between the first vibration electrode 11E and the first counter vibration electrode 11CE. The controller 70 supplies the second drive signal Vd2 (for example, the second drive voltage) between the second vibration electrode 12E and the second counter vibration electrode 12CE. The first movable part 10M vibrates due to these drive signals. Vibration has components in two directions.

As shown in FIG. 5, the first movable part 10M includes a first sensing electrode 11sE and a second sensing electrode 12sE. The first sensor counter electrode 10CE includes a first counter sensing electrode 11CsE and a second counter sensing electrode 12CsE. The first counter sensing electrode 11CsE faces the first sensing electrode 11sE. The second counter sensing electrode 12CsE faces the second sensing electrode 12sE.

The first fixed part 10F is between the first vibration electrode 11E and the first sensing electrode 11sE. The first fixed part 10F is between the second vibration electrode 12E and the second sensing electrode 12sE. For example, with the vibration of the first movable part 10M, the first sense signal Vs1 is generated between the first sensing electrode 11sE and the first counter sensing electrode 11CsE. For example, with the vibration of the first movable part 10M, the second sense signal Vs2 is generated between the second sensing electrode 12sE and the second counter sensing electrode 12CsE. The controller 70 acquires these signals.

The controller 70 includes, for example, a first amplifier 17a and a second amplifier 17b. The first sense signal Vs1 is input to the first amplifier 17a. The second sense signal Vs2 is input to the second amplifier 17b. The sense signal is amplified by these amplifiers.

In the first mode operation OP1, the controller 70 detects a first rotation angle *θ*1 (see FIG. 1) based on the signal amplified by the above amplifier. As described above, in the first mode operation OP1, the controller 70 derives the first rotation angle *θ*1 (see FIG. 1) based on the first sense signal Vs1 between the first sensing electrode 11sE and the first counter sensing electrode 11CsE, and the second sense signal Vs2 between the second sensing electrodes 12sE and the second counter sensing electrode 12CsE.

In the second mode operation OP2, the controller 70 supplies, for example, a signal (a first drive signal Vd1 and a second drive signal Vd2) based on a control signal Sc0 (see FIG. 1) to at least one of the first counter vibration electrode 11CE or the second counter vibration electrode 12CE. For example, the first drive signal Vd1 based on the control signal Sc0 is supplied between the first vibration electrode 11E and the first counter vibration electrode 11CE. For example, the second drive signal Vd2 based on the control signal Sc0 is supplied between the second vibration electrode 12E and the second counter vibration electrode 12CE. Based on the signal amplified by the amplifier described above, the controller 70 supplies the control signal Sc0 to the first sensor part 10U so that the vibration state of the first movable part 10M becomes constant (see FIG. 1). The controller 70 is configured to derive the first angular velocity Ω1 based on the change of the control signal Sc0, for example.

In the third mode operation OP3, the controller 70 supplies a signal corresponding to the third mode signal Sm3 (for example, voltage) to at least one of the first counter vibration electrode 11CE or the second counter vibration electrode 12CE.

The first gap g1 (see FIG. 4B) is provided between the base body 50S and the first vibration electrode 11E, the second vibration electrode 12E, the first sensing electrode 11sE, and the second sensing electrode 12sE.

The first counter vibration electrode 11CE, the second counter vibration electrode 12CE, the first counter sensing electrode llCsE, and the second counter sensing electrode 12CsE are fixed to the base body 50S.

### Second embodiment

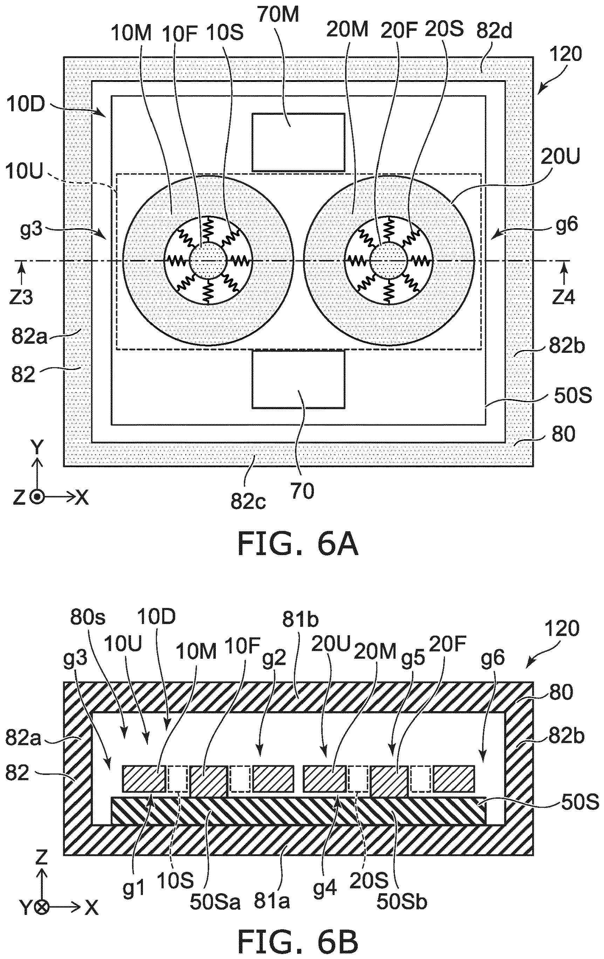

FIGS. 6A and 6B are schematic views illustrating a sensor according to a second embodiment.

FIG. 6A is a plan view. FIG. 6B is a cross-sectional view taken along the line Z3-Z4 of FIG. 6A.

As shown in FIGS. 6A and 6B, a sensor 120 according to the embodiment includes the sensor element 10D and the controller 70. In the sensor 120, the sensor element 10D includes the first sensor part 10U and a second sensor part 20U. Except for the second sensor part 20U, the configuration of the sensor 120 may be the same as the configuration of the sensor 110.

For example, the first sensor part 10U includes the first movable part 10M that can vibrate. The vibration of the first movable part 10M includes a first component of the first direction D1 and a second component of the second direction D2 crossing the first direction D1 (see FIG. 1).

For example, the second sensor part 20U includes a second movable part 20M that can vibrate. The vibration of the second movable part 20M includes a third component in a third direction and a fourth component in a fourth direction crossing the third direction. The third direction may be along one of the first direction D1 and the second direction D2 (for example, the first direction D1). The fourth direction may be along the other one of the first direction D1 and the second direction D2 (for example, the second direction D2).

In this example, the sensor element 10D includes the base body 50S. As shown in FIG. 6B, the base body 50S includes the first base body region 50Sa and a second base body region 50Sb.

The first sensor part 10U includes the first fixed part 10F and the first supporter 10S. The first fixed part 10F is fixed to the first base body region 50Sa. The first supporter 10S is supported by the first fixed part 10F. The first supporter 10S supports the first movable part 10M. The first gap g1 is provided between the base body 50S and the first supporter 10S, and between the base body 50S and the first movable part 10M.

The second sensor part 20U includes a second fixed part 20F and a second supporter 20S. The second fixed part 20F is fixed to the second base body region 50Sb. The second supporter 20S is supported by the second fixed part 20F. The second supporter 20S supports the second movable part 20M. A fourth gap g4 is provided between the base body 50S and the second supporter 20S, and between the base body 50S and the second movable part 20M.

In this example as well, the housing 80 is provided. As shown in FIG. 6B, the housing 80 includes the first member 81a and the second member 81b. The second gap g2 is provided between the first movable part 10M (first sensor part 10U) and the second member 81b. The third gap g3 is provided between the first movable part 10M (first sensor portion 10U) and the side member 82. A fifth gap g5 is provided between the second movable part 20M (second sensor part 20U) and the second member 81b. A sixth gap g6 is provided between the second movable part 20M (second sensor part 20U) and the side member 82.

Hereinafter, an example of the operation in the sensor 120 will be described.

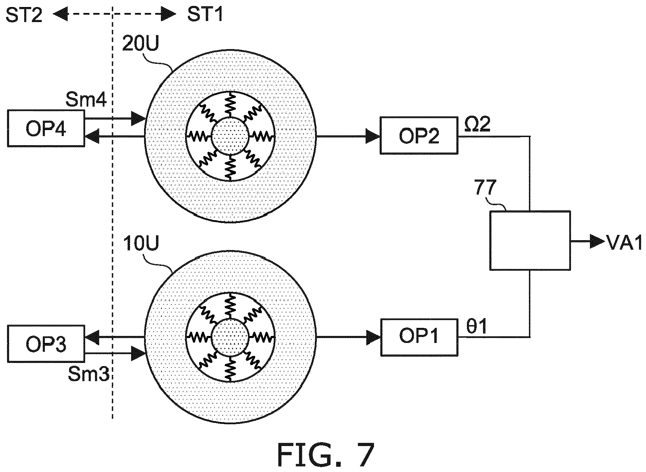

FIG. 7 is a schematic diagram illustrating operations of the sensor according to the second embodiment.

FIG. 7 illustrates operations of the controller 70 in the sensor 120.

As shown in FIG. 7, the sensor 120 is provided with the first state ST1 and the second state ST2. As described above, the first state ST1 is the detection state. The second state ST2 is the calibration state.

In the first state ST1, a first mode operation OP1 is applied to the first sensor part 10U. In the first state ST1, a second mode operation OP2 is applied to the second sensor part 20U. In the second state ST2, a third mode operation OP3 is applied to the first sensor part 10U. In the second state ST2, a fourth mode operation OP4 is applied to the second sensor part 20U. Such operations are controlled by the controller 70.

The controller 70 is configured to perform the first mode operation OP1, the second mode operation OP2, the third mode operation OP3, and the fourth mode operation OP4. The first mode operation OP1 and the third mode operation OP3 are switched and performed. The second mode operation OP2 and the fourth mode operation OP4 are switched and performed.

In the first mode operation OP1, the controller 70 is configured to derive the first rotation angle *θ*1 of the first sensor part 10U based on the first amplitude Ax of the first component and the second amplitude Ay of the second component.

In the second mode operation OP2, the controller70 is configured to derive a second angular velocity Ω2 of the second sensor part 20U based on a change in the control signal Sc0 (see FIG. 1) so that the rotation angle of the second movable part 20M becomes constant.

In the third mode operation OP3, the controller 70 is configured to supply the third mode signal Sm3 for changing the rotation angle of the first movable part 10M to the first sensor part 10U. In the third mode operation OP3, the first movable part 10M can be vibrated at an arbitrary rotation angle (third mode angle).

In the fourth mode operation OP4, the controller 70 is configured to supply a fourth mode signal Sm4 for changing the rotation angle of the second movable part 20M to the second sensor part 20U. In the fourth mode operation OP4, the second movable part 20M can be vibrated at an arbitrary rotation angle (fourth mode angle). For example, at the time of calibration, the third mode operation OP3 and the fourth mode operation OP4 are performed.

As described above with respect to the first embodiment, for example, the first angular velocity Ω1 may be derived from the first rotation angle *θ*1 obtained in the first mode operation OP1. The second angle of rotation *θ*2 may be derived from the second angular velocity Ω2 obtained in the second mode operation OP2.

In the first state ST1, a calculation result VA1 based on the first rotation angle *θ*1 derived in the first mode operation OP1 and the second angular velocity Ω2 derived in the second mode operation OP2 may be output from the controller 70.

For example, the controller 70 may include an angle calculator 77. The angle calculator 77 is configured to output the calculation result VA1 derived by the calculation based on the first rotation angle *θ*1 and the second angular velocity Q2. The calculation result VA1 is a rotation angle. In another example, the calculation result VA1 is an angular velocity. For example, the calculation result VA1 includes one of the first rotation angle *θ*1 and the second rotation angle *θ*2 derived from the second angular velocity Q2. For example, when the angular velocity Ω exceeds the threshold value Qth, the first rotation angle *θ*1 is output as the calculation result VA1. For example, when the angular velocity Ω is not more than the threshold value Qth, the second rotation angle *θ*2 derived from the second angular velocity Ω2 may be output as the calculation result VA1.

In another example, multiple regions are defined with respect to the angular velocity Ω, and in the multiple regions, the calculation result of the detection result by the first mode operation OP1 and the calculation result of the detection result by the second mode operation OP2 are output as the calculation result VA1. The content of the calculation may be changed according to the multiple regions relating to the angular velocity Ω. In the calculation, for example, a weight related to the detection result by the first mode operation OP1 and the detection result by the second mode operation OP2 may be set. The weight may be changed depending on the multiple regions with respect to the angular velocity Ω.

The sensor 120 can detect with high accuracy in a wide dynamic range.

In the sensor 120, the configuration of the first sensor part 10U may be the same as the configuration of the first sensor part 10U in the sensor 110 (see FIG. 5). For example, as described with respect to FIG. 5, the first movable part 10M includes the first vibration electrode 11E and the second vibration electrode 12E. The first sensor counter electrode 10CE includes the first counter vibration electrode 11CE facing the first vibration electrode 11E and the second counter vibration electrode 12CE facing the second vibration electrode 12E. The direction from the first fixed part 10F to the first counter vibration electrode 11CE and the direction from the first fixed part 10F to the second counter vibration electrode 12CE cross the stacking direction (from the first base body region 50Sa to the first fixed part 10F) (see FIG. 5). The direction from the first fixed part 10F to the first counter vibration electrode 11CE crosses the direction from the first fixed part 10F to the second counter vibration electrode 12CE (see FIG. 5).

As described with respect to FIG. 5, the first movable part 10M includes the first sensing electrode 11sE and the second sensing electrode 12sE. The first sensor counter electrode 10CE includes the first counter sensing electrode 11CsE facing the first sensing electrode 11sE and the second counter sensing electrode 12CsE facing the second sensing electrode 12sE. The first fixed part 10F is between the first vibration electrode 11E and the first sensing electrode 11sE. The first fixed part 10F is between the second vibration electrode 12E and the second sensing electrode 12sE.

Hereinafter, an example of the second sensor part 20U will be described.

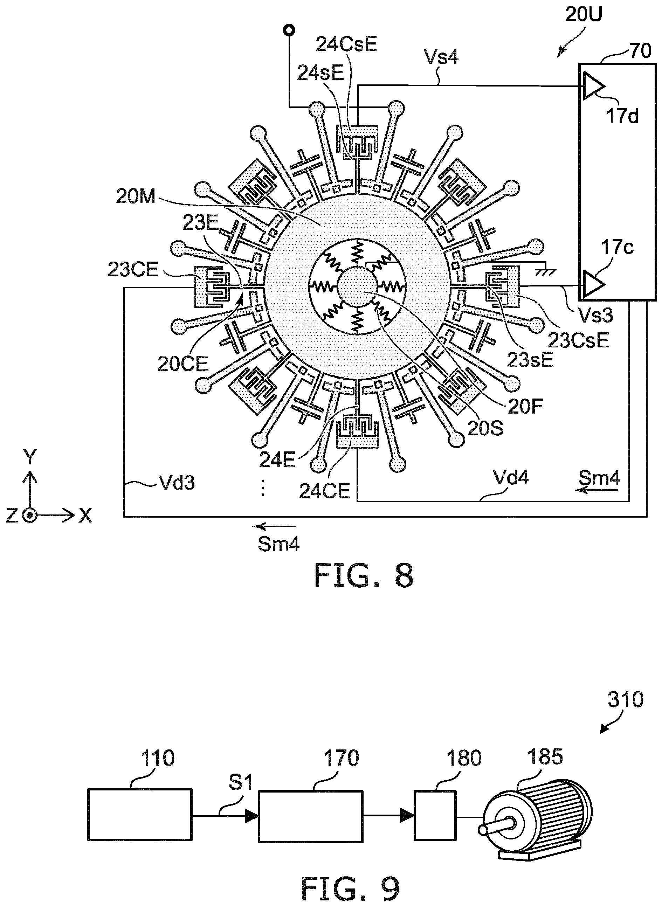

FIG. 8 is a schematic plan view illustrating a part of the sensor according to the second embodiment.

FIG. 8 illustrates the second sensor part 20U. As shown in FIG. 8, the second sensor part 20U includes the second fixed part 20F, the second supporter 20S, and a second sensor counter electrode 20CE. As described above, the second fixed part 20F is fixed to the second base body region 50Sb (see FIG. 6B). The second supporter 20S is supported by the second fixed part 20F. The second supporter 20S supports the second movable part 20M. The second sensor counter electrode 20CE faces the second movable part 20M.

The second movable part 20M includes a third vibration electrode 23E and a fourth vibration electrode 24E. The second sensor counter electrode 20CE includes a third counter vibration electrode 23CE facing the third vibration electrode 23E and a fourth counter vibration electrode 24CE facing the fourth vibration electrode 24E. A direction from the second fixed part 20F to the third counter vibration electrode 23CE and a direction from the second fixed part 20F to the fourth counter vibration electrode 24CE cross the above-mentioned stacking direction (for example, the Z-axis direction). The direction from the second fixed part 20F to the third counter vibration electrode 23CE (for example, the X-axis direction) crosses the direction from the second fixed part 20F to the fourth counter vibration electrode 24CE (for example, the Y-axis direction).

The second movable part 20M includes a third sensing electrode 23sE and a fourth sensing electrode 24sE. The second sensor counter electrode 20CE includes a third counter sensing electrode 23CsE facing the third sensing electrode 23sE and a fourth counter sensing electrode 24CsE facing the fourth sensing electrode 24sE. The second fixed part 20F is between the third vibration electrode 23E and the third sensing electrode 23sE. The second fixed part 20F is between the fourth vibration electrode 24E and the fourth sensing electrode 24sE.

For example, with the vibration of the second movable part 20M, a third sense signal Vs3 is generated between the third sensing electrode 23sE and the third counter sensing electrode 23CsE. For example, with the vibration of the second movable part 20M, a fourth sense signal Vs4 is generated between the fourth sensing electrode 24sE and the fourth counter sensing electrode 24CsE. The controller 70 acquires these signals.

The controller 70 includes, for example, a third amplifier 17c and a fourth amplifier 17d. The third sense signal Vs3 is input to the third amplifier 17c. The fourth sense signal Vs4 is input to the fourth amplifier 17d. The sense signals are amplified by these amplifiers.

The controller 70 supplies a third drive signal Vd3 to the third counter vibration electrode 23CE. The third drive signal Vd3 is applied between the third vibration electrode 23E and the third counter vibration electrode 23CE. The controller 70 supplies a fourth drive signal Vd4 to the fourth counter vibration electrode 24CE. The fourth drive signal Vd4 is applied between the fourth vibration electrode 24E and the fourth counter vibration electrode 24CE. These drive signals cause the second movable part 20M to vibrate.

For example, in the second mode operation OP2, the third drive signal Vd3 and the fourth drive signal Vd4 change based on the control signal Sc0 (see FIG. 1) for the second sensor part 20U. By controlling the control signal Sc0, the vibration of the second movable part 20M can be made constant regardless of the rotation due to the external force. By detecting such a control signal Sc0 (or third drive signal Vd3 and fourth drive signal Vd4), the angular velocity due to an external force can be known. The second mode operation OP2 corresponds to, for example, an FR mode.

For example, in the fourth mode operation OP4, the controller 70 supplies a signal corresponding to the fourth mode signal Sm4 (for example, voltage) to at least one of the third counter vibration electrode 23CE and the fourth counter vibration electrode 24CE.

### Third embodiment

The third embodiment relates to an electronic device.

FIG. 9 is a schematic view illustrating the electronic device according to the third embodiment.

As shown in FIG. 9, an electronic device according to the third embodiment includes the sensor according to the first embodiment or the second embodiment, and the circuit controller 170. In this example, the sensor 110 is drawn as the sensor. The circuit controller 170 is configured to control a circuit 180 based on a signal S1 obtained from the sensor 110. The circuit 180 is, for example, a control circuit or the like of a drive device 185. According to the embodiment, the circuit 180 or the like for controlling the drive device 185 can be controlled with high accuracy based on the detection result with high accuracy.

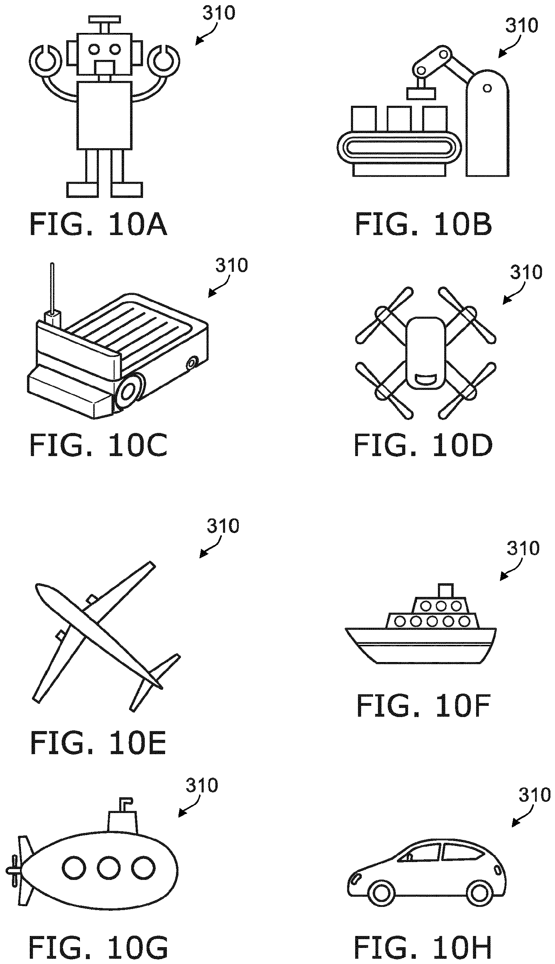

FIGS. 10A to 10H are schematic views illustrating applications of the electronic device.

As shown in FIG. 10A, the electronic device 310 may be at least a part of a robot. As shown in FIG. 10B, the electronic device 310 may be at least a part of a machining robot provided in a manufacturing plant or the like. As shown in FIG. 10C, the electronic device 310 may be at least a part of an automatic guided vehicle such as in a plant. As shown in FIG. 10D, the electronic device 310 may be at least a part of a drone (unmanned aircraft). As shown in FIG. 10E, the electronic device 310 may be at least a part of an airplane. As shown in FIG. 10F, the electronic device 310 may be at least a part of a ship. As shown in FIG. 10G, the electronic device 310 may be at least a part of a submarine. As shown in FIG. 10H, the electronic device 310 may be at least a part of an automobile. The electronic device 310 according to the third embodiment may include, for example, at least one of a robot or a mobile body.

The embodiment may include the following configurations (e.g., technical proposals).

### Configuration 1

A sensor, comprising:
a sensor element; and
a controller,
the sensor element including a first sensor part,
the first sensor part including a first movable part which can vibrate, vibration of the first movable part including a first component in a first direction and a second component in a second direction, the second direction crossing the first direction,
the controller being configured to perform a first mode operation, a second mode operation, and a third mode operation,
in the first mode operation, the controller being configured to derive a first rotation angle of the first movable part based on a first amplitude of the first component and a second amplitude of the second component,
in the second mode operation, the controller being configured to derive a first angular velocity of the first movable part based on a change of a control signal, the control signal causing a rotation angle of the first movable part to be constant, and
in the third mode operation, the controller being configured to supply a third mode signal to the first sensor part, the third mode signal causing the rotation angle of the first movable part to change.

### Configuration 2

The sensor according to Configuration 1, wherein
in the first mode operation, the controller is configured to derive the first rotation angle based on a ratio of the first amplitude of the first component and the second amplitude of the second component.

### Configuration 3

The sensor according to Configuration 1 or 2, wherein
the controller performs the third mode operation at a time of calibrating the first sensor part.

### Configuration 4

The sensor according to any one of Configurations 1 to 3, wherein
the controller performs the second mode operation when an angular velocity of the first movable part is not more than a first threshold value, and
the controller performs the first mode operation when the angular velocity of the first movable part exceeds the first threshold value.

### Configuration 5

The sensor according to any one of Configurations 1 to 4, wherein
the first sensor part includes
   a base body including a first base body region,
   a first fixed part fixed to the first base body region,
   a first supporter supported by the first fixed part and supporting the first movable part,
   a first sensor counter electrode facing the first movable part, and
a first gap is provided between the base body and the first supporter, and between the base body and the first movable part.

### Configuration 6

The sensor according to Configuration 5, wherein
in a plane crossing a direction from the first base body region to the first fixed part, the first movable part is provided around at least a part of the first fixed part.

### Configuration 7

The sensor according to Configuration 5, wherein
the first movable part includes a first vibration electrode and a second vibration electrode,
the first sensor counter electrode includes a first counter vibration electrode facing the first vibration electrode and a second counter vibration electrode facing the second vibration electrode,
a direction from the first fixed part to the first counter vibration electrode and a direction from the first fixed part to the second counter vibration electrode cross a direction from the first base body region to the first fixed part, and
the direction from the first fixed part to the first counter vibration electrode crosses the direction from the first fixed part to the second counter vibration electrode.

### Configuration 8

The sensor according to Configuration 7, wherein
the first movable part includes a first sensing electrode and a second sensing electrode,
the first sensor counter electrode includes a first counter sensing electrode facing the first sensing electrode and a second counter sensing electrode facing the second sensing electrode,
the first fixed part is between the first vibration electrode and the first sensing electrode, and
the first fixed part is between the second vibration electrode and the second sensing electrode.

### Configuration 9

The sensor according to Configuration 8, wherein
the controller derives the first rotation angle based on a first sense signal between the first sensing electrode and the first counter sensing electrode, and a second sense signal between the second sensing electrode and the second counter sensing electrode in the first mode operation.

### Configuration 10

The sensor according to any one of Configurations 7 to 9, wherein
the controller supplies a signal based on the control signal to at least one of the first counter vibration electrode or the second counter vibration electrode in the second mode operation.

### Configuration 11

The sensor according to any one of Configurations 7 to 9, wherein
the controller supplies the third mode signal to at least one of the first counter vibration electrode or the second counter vibration electrode in the third mode operation.

### Configuration 12

A sensor, comprising:
a sensor element; and
a controller,
the sensor element including a first sensor part and a second sensor part,
the first sensor part including a first movable part which can vibrate, vibration of the first movable part including a first component in a first direction and a second component in a second direction, the second direction crossing the first direction,
the second sensor part including a second movable part which can vibrate, vibration of the second movable part including a third component in a third direction and a fourth component in a fourth direction, the fourth direction crossing the third direction,
the controller being configured to perform a first mode operation, a second mode operation, a third mode operation, and a fourth mode operation,
in the first mode operation, the controller being configured to derive a first rotation angle of the first movable part based on a first amplitude of the first component and a second amplitude of the second component,
in the second mode operation, the controller being configured to derive a second angular velocity of the second movable part based on a change of a control signal, the control signal causing a rotation angle of the second movable part to be constant,
in the third mode operation, the controller being configured to supply a third mode signal to the first sensor part, the third mode signal causing a rotation angle of the first movable part to change, and
in the fourth mode operation, the controller being configured to supply a fourth mode signal to the second sensor part, the fourth mode signal causing the rotation angle of the second movable part to change.

### Configuration 13

The sensor according to Configuration 12, wherein
the controller includes an angle calculator, and
the angle calculator is configured to output a calculation result derived by calculation based on the second angular velocity.

### Configuration 14

The sensor according to Configuration 13, wherein
the sensor element further includes a base body including a first base body region and a second base body region,
the sensor part includes
   a first fixed part fixed to the first base body region
   a first supporter supported by the first fixing apt and supporting the first movable part, and
   a first sensor counter electrode facing the first movable part,
a first gap is provided between the base body and the first supporter, and between the base body and the first movable part,
the second sensor part includes
   a second fixed part fixed to the second base body region,
   a second supporter supported by the second fixed part and supporting the second movable part, and
   a second sensor counter electrode facing the second movable part, and
a fourth gap is provided between the base body and the second supporter, and between the base body and the second movable part.

### Configuration 15

The sensor according to Configuration 14, wherein
the first movable part includes a first vibration electrode and a second vibration electrode,
the first sensor counter electrode includes a first counter vibration electrode facing the first vibration electrode and a second counter vibration electrode facing the second vibration electrode,
a direction from the first fixed part to the first counter vibration electrode and a direction from the first fixed part to the second counter vibration electrode cross a stacking direction from the first base body region to the first fixed part,
the direction from the first fixed part to the first counter vibration electrode the direction from the first fixed part to the second counter vibration electrode,
the second movable part includes a third vibration electrode and a fourth vibration electrode,
the second sensor counter electrode includes a third counter vibration electrode facing the third vibration electrode, and a fourth counter vibration electrode facing the fourth vibration electrode,
a direction from the second fixed part to the third counter vibration electrode and a direction from the second fixed part to the fourth counter vibration electrode cross the stacking direction, and
the direction from the second fixed part to the third counter vibration electrode crosses the direction from the second fixed part to the fourth counter vibration electrode.

### Configuration 16

The sensor according to Configuration 15, wherein
the first movable part includes a first sensing electrode and a second sensing electrode,
the first sensing electrode includes a first counter sensing electrode facing the first sensing electrode, and a second counter sensing electrode facing the second sensing electrode,
the first fixed part is between the first vibration electrode and the first sensing electrode,
the first fixed part is between the second vibration electrode and the second sensing electrode,
the second movable part includes a third sensing electrode and a fourth sensing electrode,
the second sensor counter electrode includes a third counter sensing electrode facing the third sensing electrode, and a fourth counter sensing electrode facing the fourth sensing electrode,
the second fixed part is between the third vibration electrode and the third sensing electrode, and
the second fixed part is between the fourth vibration electrode and the fourth sensing electrode.

### Configuration 17

The sensor according to any one of Configurations 1 to 16, further comprising:
a housing surrounding the sensor element,
an atmospheric pressure in a space inside the housing is less than 1 atm.

### Configuration 18

The sensor according to Configuration 17, wherein
the housing includes a first member, and a second member connected with the first member,
the sensor element is between the first member and the second member,
the base body is fixed to the first member, and
a gap is provided between the first movable part and the second member.

### Configuration 19

An electronic device; comprising:
the sensor according to any one of Configurations 1 to 18; and
a circuit controller configured to control a circuit based on a signal obtained from the sensor.

According to the embodiment, a sensor and an electronic device can be provided in which accuracy can be improved.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as sensor elements, sensor parts, movable parts, fixed parts, supporters, base bodies, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors practicable by an appropriate design modification by one skilled in the art based on the sensors described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A sensor, comprising:
a sensor element; and
a controller,
the sensor element including a first sensor part,
the first sensor part including a first movable part which can vibrate, vibration of the first movable part including a first component in a first direction and a second component in a second direction, the second direction crossing the first direction,
the controller being configured to perform a first mode operation, a second mode operation, and a third mode operation,
in the first mode operation, the controller being configured to derive a first rotation angle of the first movable part based on a first amplitude of the first component and a second amplitude of the second component,
in the second mode operation, the controller being configured to derive a first angular velocity of the first movable part based on a change of a control signal, the control signal causing a rotation angle of the first movable part to be constant, and
in the third mode operation, the controller being configured to supply a third mode signal to the first sensor part, the third mode signal causing the rotation angle of the first movable part to change.

2. The sensor according to claim 1, wherein
in the first mode operation, the controller is configured to derive the first rotation angle based on a ratio of the first amplitude of the first component and the second amplitude of the second component.

3. The sensor according to claim 1 or 2, wherein
the controller performs the third mode operation at a time of calibrating the first sensor part.

4. The sensor according to any one of claims 1-3, wherein
the controller performs the second mode operation when an angular velocity of the first movable part is not more than a first threshold value, and
the controller performs the first mode operation when the angular velocity of the first movable part exceeds the first threshold value.

5. The sensor according to any one of claims 1-4, wherein
the first sensor part includes
a base body including a first base body region,
a first fixed part fixed to the first base body region,
a first supporter supported by the first fixed part and supporting the first movable part,
a first sensor counter electrode facing the first movable part, and
a first gap is provided between the base body and the first supporter, and between the base body and the first movable part.

6. The sensor according to claim 5, wherein
in a plane crossing a direction from the first base body region to the first fixed part, the first movable part is provided around at least a part of the first fixed part.

7. The sensor according to claim 5, wherein
the first movable part includes a first vibration electrode and a second vibration electrode,
the first sensor counter electrode includes a first counter vibration electrode facing the first vibration electrode and a second counter vibration electrode facing the second vibration electrode,
a direction from the first fixed part to the first counter vibration electrode and a direction from the first fixed part to the second counter vibration electrode cross a direction from the first base body region to the first fixed part, and
the direction from the first fixed part to the first counter vibration electrode crosses the direction from the first fixed part to the second counter vibration electrode.

8. The sensor according to claim 7, wherein
the first movable part includes a first sensing electrode and a second sensing electrode,
the first sensor counter electrode includes a first counter sensing electrode facing the first sensing electrode and a second counter sensing electrode facing the second sensing electrode,
the first fixed part is between the first vibration electrode and the first sensing electrode, and
the first fixed part is between the second vibration electrode and the second sensing electrode.

9. The sensor according to claim 8, wherein
the controller derives the first rotation angle based on a first sense signal between the first sensing electrode and the first counter sensing electrode, and a second sense signal between the second sensing electrode and the second counter sensing electrode in the first mode operation.

10. A sensor, comprising:
a sensor element; and
a controller,
the sensor element including a first sensor part and a second sensor part,
the first sensor part including a first movable part which can vibrate, vibration of the first movable part including a first component in a first direction and a second component in a second direction, the second direction crossing the first direction,
the second sensor part including a second movable part which can vibrate, vibration of the second movable part including a third component in a third direction and a fourth component in a fourth direction, the fourth direction crossing the third direction,
the controller being configured to perform a first mode operation, a second mode operation, a third mode operation, and a fourth mode operation
in the first mode operation, the controller being configured to derive a first rotation angle of the first movable part based on a first amplitude of the first component and a second amplitude of the second component,
in the second mode operation, the controller being configured to derive a second angular velocity of the second movable part based on a change of a control signal, the change causing a rotation angle of the second movable part to be constant,
in the third mode operation, the controller being configured to supply a third mode signal to the first sensor part, the third mode signal causing a rotation angle of the first movable part to change, and
in the fourth mode operation, the controller being configured to supply a fourth mode signal to the second sensor part, the fourth mode signal causing the rotation angle of the second movable part to change.

11. The sensor according to claim 10, wherein
the controller includes an angle calculator, and
the angle calculator is configured to output a calculation result derived by calculation based on the second angular velocity.

12. The sensor according to claim 11, wherein
the sensor element further includes a base body including a first base body region and a second base body region,
the sensor part includes
a first fixed part fixed to the first base body region
a first supporter supported by the first fixing apt and supporting the first movable part, and
a first sensor counter electrode facing the first movable part,
a first gap is provided between the base body and the first supporter, and between the base body and the first movable part,
the second sensor part includes
a second fixed part fixed to the second base body region,
a second supporter supported by the second fixed part and supporting the second movable part, and
a second sensor counter electrode facing the second movable part, and
a fourth gap is provided between the base body and the second supporter, and between the base body and the second movable part.

13. The sensor according to claim 12, wherein
the first movable part includes a first vibration electrode and a second vibration electrode,
the first sensor counter electrode includes a first counter vibration electrode facing the first vibration electrode and a second counter vibration electrode facing the second vibration electrode,
a direction from the first fixed part to the first counter vibration electrode and a direction from the first fixed part to the second counter vibration electrode cross a stacking direction from the first base body region to the first fixed part,
the direction from the first fixed part to the first counter vibration electrode the direction from the first fixed part to the second counter vibration electrode,
the second movable part includes a third vibration electrode and a fourth vibration electrode,
the second sensor counter electrode includes a third counter vibration electrode facing the third vibration electrode, and a fourth counter vibration electrode facing the fourth vibration electrode,
a direction from the second fixed part to the third counter vibration electrode and a direction from the second fixed part to the fourth counter vibration electrode cross the stacking direction, and
the direction from the second fixed part to the third counter vibration electrode crosses the direction from the second fixed part to the fourth counter vibration electrode.

14. The sensor according to claim 13, wherein
the first movable part includes a first sensing electrode and a second sensing electrode,
the first sensing electrode includes a first counter sensing electrode facing the first sensing electrode, and a second counter sensing electrode facing the second sensing electrode,
the first fixed part is between the first vibration electrode and the first sensing electrode,
the first fixed part is between the second vibration electrode and the second sensing electrode,
the second movable part includes a third sensing electrode and a fourth sensing electrode,
the second sensor counter electrode includes a third counter sensing electrode facing the third sensing electrode, and a fourth counter sensing electrode facing the fourth sensing electrode,
the second fixed part is between the third vibration electrode and the third sensing electrode, and
the second fixed part is between the fourth vibration electrode and the fourth sensing electrode.

15. An electronic device; comprising:
the sensor according to any one of claims 1-14; and
a circuit controller configured to control a circuit based on a signal obtained from the sensor.
